# EUROPEAN PATENT APPLICATION

(11) **EP 4 645 081 A1**
(43) Date of publication of application: **05.11.2025**
(21) Application number: 24898943.6
(22) Date of filing: 04.06.2024
(51) Int. Cl.: G06F 9/48

(54) **RESOURCE ALLOCATION METHOD, PROCESSOR AND ELECTRONIC DEVICE**

(30) Priority: 07.03.2024 CN 202410260546
(71) Applicant: Hygon Information Technology Co., Ltd., Tianjin 300392 (CN)
(72) Inventor: SHI, Xing, Tianjin 300392 (CN)
(74) Representative: Regimbeau
(86) International application number: PCT/CN2024/097173
(87) International publication number: WO 2025/184995

(57) **Abstract**

A resource allocation method, a processor and an electronic device. The resource allocation method is applied to a processor, where the processor is configured to simultaneously execute a plurality of threads, the processor includes a micro-operation cache, and the method includes: acquiring hit information of micro-operations hitting the micro-operation cache for the plurality of threads within a sampling window (S201); determining a control strategy according to the hit information (S202); and controlling allocation of resources of the micro-operation cache according to the control strategy (S203). The method can at least partially solve the problem of low overall micro-operation cache hit rate caused by a plurality of threads competing for the resources of the micro-operation cache, and improve the utilization of micro-operation cache resources.

## Description

The present application claims priority to a Chinese Patent Application No. 202410260546.4, filed on March 7, 2024. The disclosure of the above Chinese Patent Application is incorporated by reference herein in its entirety as part of the present application.

### TECHNICAL FIELD

Embodiments of the present disclosure relate to a resource allocation method, a processor and an electronic device.

### BACKGROUND

Traditional central processing units (CPU) may only process one instruction sequence at a certain time, commonly referred to as a thread. In the process of threading, processing units of the CPU need to continuously call instructions and data for processing. With the development of CPU technologies, the master frequency and performance of the CPU continue to improve, the speed of calling the instructions and data needs to be continuously improved. Unfortunately, the development of memory technologies does not kept up with the speed of the CPU development, and memories typically may not provide enough instructions and data for the CPU to process.

In order to improve the utilization rate of the CPU processing units, a thread-level parallel technology is proposed, namely more than one instruction sequence is executed in the core of the CPU. For an operating system, a physical processor is equivalent to a plurality of logical processors, to implement a multi-threading technology.

### SUMMARY

At least one embodiment of this disclosure provides a resource allocation method applied to a processor, where the processor is configured to simultaneously execute a plurality of threads, the processor includes a micro-operation cache, and the method includes: acquiring hit information of micro-operations hitting the micro-operation cache for the plurality of threads within a sampling window; determining a control strategy according to the hit information; and controlling allocation of resources of the micro-operation cache according to the control strategy.

For example, in the resource allocation method provided in an embodiment of the present disclosure, the determining the control strategy according to the hit information includes: calculating a micro-operation cache hit rate for each of the plurality of threads according to the hit information, where the micro-operation cache hit rate indicates a proportion of micro-operations that hit the micro-operation cache in each thread among all micro-operations in each thread within the sampling window; calculating a total micro-operation cache hit rate for the plurality of threads according to the hit information, where the total micro-operation cache hit rate indicates a proportion of micro-operations that hit the micro-operation cache in the plurality of threads among all micro-operations in the plurality of threads within the sampling window; and generating the control strategy based on the micro-operation cache hit rate for each of the plurality of threads and the total micro-operation cache hit rate.

For example, in the resource allocation method provided in an embodiment of the present disclosure, the generating the control strategy based on the micro-operation cache hit rate for each of the plurality of threads and the total micro-operation cache hit rate includes: in response to the total micro-operation cache hit rate being higher than or equal to a hit rate threshold, determining that the control strategy includes storing a target micro-operation in micro-operations of each of the plurality of threads into the micro-operation cache; and in response to the total micro-operation cache hit rate being lower than the hit rate threshold, determining the control strategy according to the micro-operation cache hit rate for each of the plurality of threads and the hit rate threshold.

For example, in the resource allocation method provided in an embodiment of the present disclosure, the in response to the total micro-operation cache hit rate being lower than the hit rate threshold, determining the control strategy according to the micro-operation cache hit rate for each of the plurality of threads and the hit rate threshold includes: in response to the total micro-operation cache hit rate being lower than the hit rate threshold, selecting a target thread, of which the micro-operation cache hit rate conforms to a condition, according to the micro-operation cache hit rate for each of the plurality of threads; and determining that the control strategy includes writing a micro-operation of the target thread into the micro-operation cache, and not writing micro-operations of remaining threads in the plurality of threads except for the target thread into the micro-operation cache.

For example, in the resource allocation method provided in an embodiment of the present disclosure, the in response to the total micro-operation cache hit rate being lower than the hit rate threshold, selecting the target thread, of which the micro-operation cache hit rate conforms to the condition, according to the micro-operation cache hit rate for each of the plurality of threads includes: in response to the total micro-operation cache hit rate being lower than the hit rate threshold, excluding an object thread with a lowest micro-operation cache hit rate among the plurality of threads to obtain the target thread.

For example, in the resource allocation method provided in an embodiment of the present disclosure, the in response to the total micro-operation cache hit rate being lower than the hit rate threshold, selecting the target thread, of which the micro-operation cache hit rate conforms to a condition, according to the micro-operation cache hit rate for each of the plurality of threads includes: sorting the plurality of threads according to the micro-operation cache hit rate for each of the plurality of threads, preferentially excluding an object thread with a lowest micro-operation cache hit rate among the plurality of threads sequentially, and calculating a total micro-operation cache hit rate of remaining threads after excluding the object thread, until the total micro-operation cache hit rate of the remaining threads is higher than or equal to the hit rate threshold; and using the remaining threads of which the total micro-operation cache hit rate higher than or equal to the hit rate threshold as target threads.

For example, in the resource allocation method provided in an embodiment of the present disclosure, the acquiring hit information of micro-operations hitting the micro-operation cache for the plurality of threads within a sampling window includes: monitoring a first number of micro-operations from a decoder and a second number of micro-operations from the micro-operation cache for each of the plurality of threads, where the first number and the second number are used as the hit information.

For example, in the resource allocation method provided in an embodiment of the present disclosure, the sampling window includes a cycle number of clock cycles within a preset range.

For example, in the resource allocation method provided in an embodiment of the present disclosure, the controlling allocation of resources of the micro-operation cache according to the control strategy includes: within a control window after the sampling window ends, controlling allocation of resources of the micro-operation cache according to the control strategy.

For example, in the resource allocation method provided in an embodiment of the present disclosure, within the sampling window, a target micro-operation in micro-operations of each of the plurality of threads is stored in the micro-operation cache.

For example, in the resource allocation method provided in an embodiment of the present disclosure, the sampling window and the control window serve as one control cycle, and the method further includes: at the end of one control cycle, the cycle number of the clock cycles is recounted.

For example, in the resource allocation method provided in an embodiment of the present disclosure, a time length of the control window is same as a time length of the sampling window.

For example, in the resource allocation method provided in an embodiment of the present disclosure, the target micro-operation is obtained by decoding a core instruction of each thread, where each thread includes the core instruction and a non-core instruction, and an importance degree of the core instruction is greater than an importance degree of the non-core instruction.

At least one embodiment of this disclosure provides a processor, configured to simultaneously execute a plurality of threads, where the processor includes: a micro-operation cache, a monitor and a controller. The monitor is coupled with the micro-operation cache, and configured to acquire hit information of micro-operations hitting the micro-operation cache for the plurality of threads within a sampling window, and determine a control strategy according to the hit information. The controller is coupled with the micro-operation cache and the monitor, and configured to acquire the control strategy provided by the monitor, and control allocation of resources of the micro-operation cache according to the control strategy.

For example, the processor provided in an embodiment of the present disclosure further includes: a decoder, coupled with the monitor and configured to decode an instruction of each thread to obtain a micro-operation of each thread; where the monitor is configured to acquire a first number of micro-operations from the decoder and a second number of micro-operations from the micro-operation cache for each of the plurality of threads, where the first number and the second number are used as the hit information.

For example, the processor provided in an embodiment of the present disclosure further includes: a buffer, where an input end of the buffer is coupled with an output end of the controller, an output end of the buffer is coupled with the micro-operation cache, the buffer includes a plurality of buffer regions, the plurality of buffer regions are in one-to-one correspondence with micro-operations of the plurality of threads and are configured to store the micro-operations of the plurality of threads, the buffer is configured to write micro-operations in the buffer regions into the micro-operation cache, the decoder is also coupled with an input end of the controller, where the controller is configured to: control whether a micro-operation of a current thread in the plurality of threads provided by the decoder is written into a buffer region corresponding to the current thread according to the control strategy.

At least one embodiment of this disclosure provides an electronic device, including: the processor provided by any one embodiment of the present disclosure.

### BRIEF DESCRIPTION OF DRAWINGS

To describe the technical solutions in the embodiments of the present disclosure more clearly, the following briefly describes the accompanying drawings required for describing the embodiments. Apparently, the accompanying drawings in the following description relate to merely some embodiments of the present disclosure and are not intended to limit the present disclosure.
Fig. 1 shows a workflow diagram of a CPU in a Simultaneous Multi-Threading (SMT) mode;
Fig. 2 shows a flow diagram of a resource allocation method provided in at least one embodiment of the present disclosure;
Fig. 3 shows a flow diagram of a method in Step S20 in Fig. 2 provided in at least one embodiment of the present disclosure;
Fig. 4 shows a flow diagram of another resource allocation method provided in at least one embodiment of the present disclosure;
Fig. 5 shows a schematic diagram of a processor provided in at least one embodiment of the present disclosure;
Fig. 6 shows a schematic diagram of a microstructure of a processor provided in at least one embodiment of the present disclosure;
Fig. 7 is a schematic block diagram of an electronic device provided in some embodiments of the present disclosure; and
Fig. 8 is a schematic block diagram of another electronic device provided in some embodiments of the present disclosure.

### DETAILED DESCRIPTION

In order to make objects, technical details and advantages of the embodiments of the disclosure apparent, the technical solutions of the embodiments will be described in a clearly and fully understandable way in connection with the drawings related to the embodiments of the disclosure. Apparently, the described embodiments are just a part but not all of the embodiments of the disclosure. Based on the described embodiments herein, those skilled in the art can obtain other embodiment(s), without any inventive work, which should be within the scope of the disclosure.

Unless otherwise defined, all the technical and scientific terms used herein have the same meanings as commonly understood by one of ordinary skill in the art to which the present disclosure belongs. The terms "first," "second," etc., which are used in the description and the claims of the present application for disclosure, are not intended to indicate any sequence, amount or importance, but distinguish various components. Also, the terms such as "a," "an," "the," etc., are not intended to limit the amount, but indicate the existence of at least one. The terms "comprise," "comprising," "include," "including," etc., are intended to specify that the elements or the objects stated before these terms encompass the elements or the objects and equivalents thereof listed after these terms, but do not preclude the other elements or objects. The phrases "connect", "connected", etc., are not intended to define a physical connection or mechanical connection, but may include an electrical connection, directly or indirectly. "on," "under," "right," "left" and the like are only used to indicate relevant position relationship, and when the position of the object which is described is changed, the relevant position relationship may be changed accordingly.

Multi-threading includes, for example, Simultaneous Multi-Threading (SMT). The SMT is also known as Hyper-Threading, and may make a single physical CPU core look like two or more independent processors. In this way, the processor may process a plurality of tasks simultaneously, which greatly improves the usage efficiency of CPU. The SMT technology is an important technology for improving the overall performance of the CPU. It utilizes multi-emission, out-of-order execution and other mechanisms of the high-performance CPU core to simultaneously execute instructions from a plurality of threads. In this way, one physical CPU core presents a plurality of virtual CPU cores to software and operating systems. The modern multi-emission high-performance CPU core often fails to fully utilize its internal multiple execution units and hardware resources at most of the time when executing a single thread; and when the thread is paused due to certain reasons (such as a second-level cache miss), the hardware execution unit can only idle, hardware execution units may only idle, these all cause the waste of hardware resources and reduced performance-to-power ratio. In the SMT mode, when one thread is paused, other threads may still run, which improves the utilization rate of the hardware resources and thus improves the multi-thread throughput, overall performance, and performance-to-power ratio of the CPU core. According to the maximum number of active threads supported, the SMT may be referred to as SMT2 (up to two active threads), SMT4 (up to four active threads), and the like.

The CPU core includes a plurality of flow stages, such as Branch prediction, Instruction fetch, Decode, Dispatch and Rename, Execute, and Retire.

The modern high-performance CPU often has an instruction cache (IC) and a micro-operation cache (OC), the IC is used to cache undecoded instructions, and the OC is used to cache micro-operations. The micro-operation is one or several micro-operations that decode and divide the instructions, which may be transmitted to subsequent pipelines and executed. When the instruction fetch pipeline finds the existence of the instructions in the IC or OC according to results of the branch prediction pipeline, it may directly acquire the undecoded instructions or micro-operations (instructions decoded already) from these two caches, to avoid high time delay caused by accessing a lower-level storage region. In addition, directly acquiring the micro-operations from the OC may reduce the process of taking and decoding the undecoded instructions from the IC, the higher instruction emission bandwidth and faster running speed may be acquired, thereby the CPU core performance is improved, and the power consumption is effectively reduced.

The OC is an important constituent part of the modern high-performance CPU core, and using it may effectively reduce front-end delay of the CPU core pipeline, lower the power consumption, and increase the bandwidth for fetching instruction. It is of great help to the CPU core performance and power consumption and the like. After the branch prediction unit provides new instruction segment information, if a corresponding instruction segment is found in the OC, there is no need to fetch the instruction from the IC and decode it. Instead, a corresponding micro-operation segment is directly acquired from the OC and provided to the back-end pipeline.

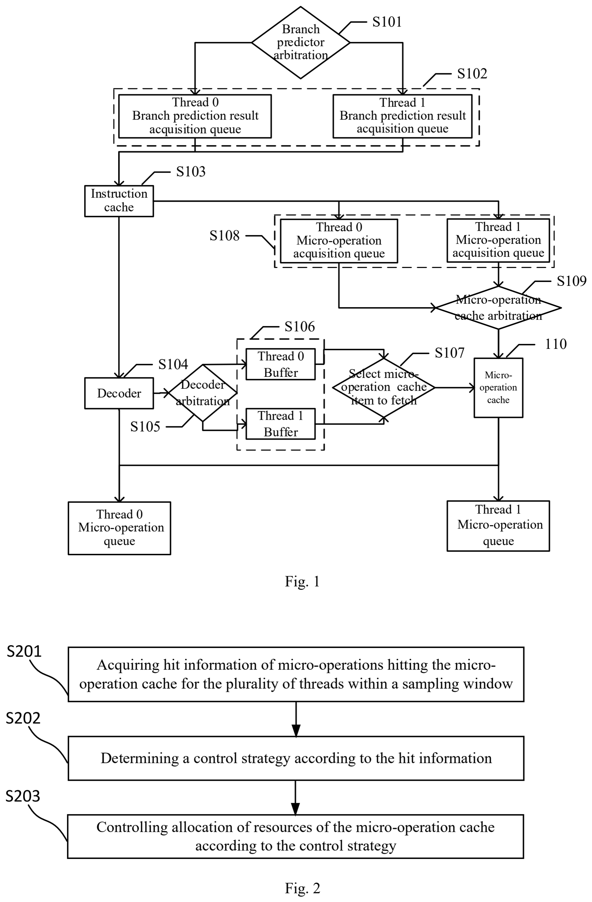

Fig. 1 shows a workflow diagram of a CPU in an SMT mode.

As shown in Fig. 1, the operation of the CPU in the SMT mode includes Steps S101~S109.

Step S101: performing thread arbitration by a branch predictor, and selecting a thread (thread 0 or thread 1) on a pipeline of a current clock cycle to perform branch prediction on a branch prediction pipeline, to obtain a branch prediction result. The branch prediction is used to predict a target address for a branch instruction. The branch prediction result includes, for example, Branch Prediction Information (BPI), namely prediction information output by the branch predictor, including a target address of an instruction, a thread label, a starting position of a storage space and the like. A piece of the BPI may include one or more consecutive instructions. For example, the SMT mode includes two active threads, thread 0 and thread 1. For example, the branch predictor arbitrates according to polling or other methods to select the thread on the pipeline in the current clock cycle.

Step 102: writing the BPI into a branch prediction result acquisition queue corresponding to the thread. For example, in Step S101, if the branch predictor selects the thread 0 for branch prediction, the BPI is written into the branch prediction result acquisition queue of the thread 0. In Step S101, if the branch predictor selects the thread 1 for branch prediction, the BPI is written into the branch prediction result acquisition queue of the thread 1.

Step 103: performing thread arbitration by an instruction cache to select the thread (thread 0 or thread 1) on the pipeline of the current clock cycle, and fetching the BPI from the branch prediction result acquisition queue corresponding to the thread in order. If the thread selected by the instruction cache through thread arbitration has not been cached in a micro-operation cache 110, the BPI is sent to the pipeline of the instruction cache, and the pipeline of the instruction cache is responsible for fetching undecoded instructions from the instruction cache and providing the undecoded instructions fetched by the instruction cache to a decoder. For example, if the thread on the pipeline of the current clock cycle selected by the instruction cache is the thread 1, the BPI is fetched from the branch prediction result acquisition queue of the thread 1 in order, and the BPI is sent to the pipeline of the instruction cache, thereby the undecoded instructions of the thread 1 are fetched from the instruction cache and the undecoded instructions of the thread 1 are provided to the decoder. Similarly, the thread on the pipeline of the current clock cycle selected by the instruction cache may also be the thread 0. For example, the instruction cache arbitrates to select the thread on the pipeline of the current clock cycle according to polling or other methods. If the BPI obtained for the thread selected by the instruction cache through thread arbitration has been cached in the micro-operation cache 110, the step skips to the subsequent Step S108.

Step 104: decoding the undecoded instruction into a micro-operation (UOP) by the decoder, and sending the UOP decoded to a micro-operation queue corresponding to the thread for back-end execution. For example, the decoder decodes the undecoded instruction of the thread 0 to obtain the UOP of the thread 0, the decoder provides the UOP of the thread 0 to the micro-operation queue of the thread 0, so that the UOP of the thread 0 enters the micro-operation queue of the thread 0.

Step S105: simultaneously providing the UOP to a buffer by the decoder. For example, the buffer includes a plurality of buffer regions, the plurality of buffer regions are in one-to-one correspondence with a plurality of threads, and each buffer region is used to store UOP of a thread. In Step S105, the decoder arbitrates and selects which thread's corresponding buffer region in the buffer to write the UOP decoded by the decoder. For example, if the decoder obtains the UOP of the thread 0, the decoder arbitrates and writes the UOP provided by the decoder into the buffer region of the thread 0.

For example, while the decoder provides UOP of a certain thread to the micro-operation queue of the thread, it also performs decoder arbitration and writes the UOP of the thread to the buffer region corresponding to the thread.

Step 106: accumulating the UOP of each thread into a plurality of instructions in the buffer region, forming a micro-operation item.

Step 107: performing thread arbitration by the pipeline of the micro-operation cache, selecting the thread on the pipeline of the current clock cycle, fetching the micro-operation cache item already formed by the thread from the buffer, and writing into the micro-operation cache 110. For example, the thread on the pipeline of the current clock cycle selected by the pipeline of the micro-operation cache 110 through thread arbitration is the thread 1, the micro-operation cache item already formed by the thread 1 is fetched from the buffer and written into the micro-operation cache 110.

Step S108: storing the BPI provided by the instruction cache in a micro-operation acquisition queue. For example, if the BPI obtained, from the branch prediction result acquisition queue, for the thread selected by the instruction cache through arbitration has already been cached in the micro-operation cache 110, then the BPI of the thread is no longer sent to the instruction cache pipeline and decoder, but directly to the micro-operation acquisition queue corresponding to the thread.

For example, if the BPI of the thread 1 selected by the instruction cache through arbitration has been cached in the micro-operation cache 110, then the BPI of the thread 1 is no longer provided to the instruction cache pipeline and decoder, but to the micro-operation acquisition queue of the thread 1, so that the micro-operation acquisition queue of the thread 1 stores the BPI of the thread 1.

Step S109: performing thread arbitration by the pipeline of the micro-operation cache, selecting the thread on the pipeline of the current clock cycle, fetching the BPI from the micro-operation acquisition queue of the thread, searching for the corresponding UOP in the micro-operation cache, and sending the UOP to the corresponding micro-operation queue for back-end execution.

For example, the pipeline of the micro-operation cache 110 performs thread arbitration, and the selected thread on the pipeline of the current clock cycle is the thread 0, the BPI is fetched from the micro-operation acquisition queue of the thread 0, the corresponding UOP is searched, and the UOP is sent to the corresponding micro-operation queue for back-end execution.

In this workflow, the micro-operation in the micro-operation queue of each thread may come from the decoder or from the micro-operation cache.

As described above, when the micro-operation cache is filled, a plurality of threads share the entire micro-operation cache space, this creates a situation in which the plurality of threads compete with each other for micro-operation cache resources; and due to the differences in program codes executed by different threads of the processor, the different threads have different requirements for the micro-operation cache resources.

Because the capacity of the micro-operation cache is limited, with the limited capacity of the micro-operation cache, this mutual competition for the micro-operation cache resources among the plurality of threads may cause that the plurality of threads are unable to achieve a relatively high micro-operation cache hit rate, so that the usage rate of the micro-operation cache is low.

In response to the problem of the low utilization rate of the micro-operation cache caused by multi-threaded competition for the micro-operation cache resources in current processors, the present disclosure provides a resource allocation method, and the resource allocation method may monitor the micro-operation cache utilization rate for a plurality of threads from the perspective of the entire CPU core, and form a feedback mechanism according to a monitoring result, to dynamically control the resource occupation of the micro-operation cache by the different threads. The overall hit rate of the micro-operation cache is improved in this way.

The resource allocation method is applied to a processor. The processor is configured to simultaneously execute a plurality of threads, the processor includes a micro-operation cache, and the method includes: acquiring hit information of micro-operations hitting the micro-operation cache for the plurality of threads within a sampling window; determining a control strategy according to the hit information; and controlling allocation of resources of the micro-operation cache according to the control strategy. Embodiments of the present disclosure at least partially solve the problem of the plurality of threads competing for OC resources so that the overall OC hit rate is not high, which not only accelerates the running speed of the entire CPU, but also saves the power consumption.

Fig. 2 shows a flow diagram of a resource allocation method provided in at least one embodiment of the present disclosure.

As shown in Fig. 2, the resource allocation method includes Steps S201~S203. The resource allocation method is applied to a processor, and the processor is configured to simultaneously execute a plurality of threads. For example, the processor executes the plurality of threads in the SMT mode. The processor includes a micro-operation cache. The micro-operation cache includes a plurality of cached micro-operations.

Step S201: acquiring hit information of micro-operations hitting the micro-operation cache for the plurality of threads within a sampling window.

Step S202: determining a control strategy according to the hit information.

Step S203: controlling allocation of resources of the micro-operation cache according to the control strategy.

For Step S201, when the micro-operation hits the micro-operation cache means that the micro-operation cache has cached the micro-operation. For example, according to the description in Fig. 1, it is possible to determine whether the micro-operation is cached in the micro-operation cache according to the BPI. If the micro-operation is already cached in the micro-operation cache, the micro-operation is directly provided by the micro-operation cache to micro-operation queue without the need for the decoder to provide the micro-operation to the micro-operation queue.

For example, within the sampling window, a first number of micro-operations from the decoder and a second number of micro-operations from the micro-operation cache for each of the plurality of threads are monitored, and the first number and the second number are used as the hit information. For example, in the example of Fig. 1, it is possible to monitor within the sampling window which micro-operations in respective micro-operation queues of the thread 0 and the thread 1 come from the decoder and which come from the micro-operation cache, and count the number of the micro-operations from the decoder and the number of the micro-operations from the micro-operation cache in the micro-operation queue of the thread 0 and the micro-operation queue of the thread 1 respectively.

In some embodiments of the present disclosure, the sampling window is set, and the hit information of the micro-operations hitting the micro-operation cache is collected for each thread within the sampling window. The sampling window, for example, includes the number of clock cycles within a preset range. For example, the sampling window includes a preset number of clock cycles. In this example, the preset number is an example of the preset range. For example, every 500 clock cycles are used as a sampling window, namely the number of clock cycles in [0, 499] is used as a sampling window. In other embodiments, the sampling window may also be a preset number of instructions.

For example, 1000 clock cycles are used as a sampling window, and the hit information of the micro-operations hitting the micro-operation cache is collected for the plurality of threads during the 1000 clock cycles. For another example, 50000 instructions are used as a sampling window, namely the preset number of the instructions is 50000, after a total of 50000 micro-operations of the plurality of threads are collected, in the 50000 micro-operations, the number of the micro-operations from the decoder and the number of the micro-operations from the micro-operation cache, as well as the thread to which each micro-operation belongs, are counted.

For Step S202, the control strategy may include, for example, whether to store the micro-operations from the plurality of threads in the micro-operation cache, or which threads' micro-operations are stored in the micro-operation cache. For example, the target thread is selected from the plurality of threads according to the hit information, and the control strategy is to only store the micro-operation of the target thread in the micro-operation cache.

For Step S203, the resources of the micro-operation cache include a storage space of the micro-operation cache. For example, if the control strategy is to store only the micro-operation of the target thread in the micro-operation cache, then the storage space of the micro-operation cache is controlled to store only the micro-operation of the target thread.

For example, if the number of core instructions of a thread in the plurality of threads is relatively large, the micro-operation of this thread may not be stored in the micro-operation cache.

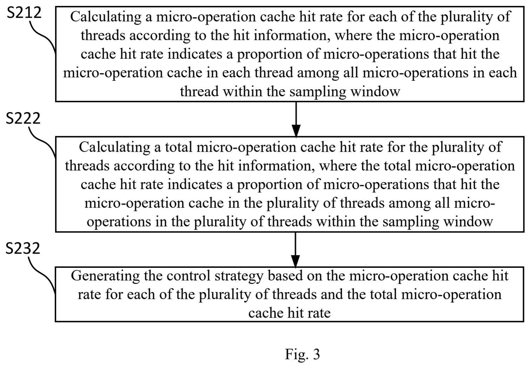

Fig. 3 shows a flow diagram of a method in Step S20 in Fig. 2 provided in at least one embodiment of the present disclosure.

As shown in Fig. 3, the method includes Steps S212~S232.

Step S212: calculating a micro-operation cache hit rate for each of the plurality of threads according to the hit information, where the micro-operation cache hit rate indicates a proportion of micro-operations that hit the micro-operation cache in each thread among all micro-operations in each thread within the sampling window.

Step S222: calculating a total micro-operation cache hit rate for the plurality of threads according to the hit information, where the total micro-operation cache hit rate indicates a proportion of micro-operations that hit the micro-operation cache in the plurality of threads among all micro-operations in the plurality of threads within the sampling window.

Step S232: generating the control strategy based on the micro-operation cache hit rate for each of the plurality of threads and the total micro-operation cache hit rate.

The method dynamically controls the occupation of micro-operation cache resources by different threads according to the micro-operation cache hit rate of each thread and the total micro-operation cache hit rate, thereby the overall hit rate of the micro-operation cache is improved.

For Step S212, for example, in the SMT mode, it includes thread 0 and thread 1 executed simultaneously, and according to the hit information, the micro-operation cache hit rate of the thread 0 and the micro-operation cache hit rate of the thread 1 are calculated.

The micro-operation cache hit rate is, for example, the ratio of the number of micro-operations that hit the micro-operation cache among all micro-operations acquired from the thread (for example, thread 0 or thread 1) within the sampling window to the total number of all micro-operations in the thread. For example, if P1 micro-operations of a certain thread are acquired within the sampling window, and m1 micro-operations hit the micro-operation cache, then the micro-operation cache hit rate of this thread is Y1=m1/P1.

For example, if 1000 micro-operations of the thread 0 are acquired within the sampling window, and 200 micro-operations hit the micro-operation cache, then the micro-operation cache hit rate of the thread 0 is 20%. For example, if 1500 micro-operations of the thread 1 are acquired within the sampling window, and 450 micro-operations hit the micro-operation cache, then the micro-operation cache hit rate of the thread 1 is 30%.

For Step S222, the total micro-operation cache hit rate of the plurality of threads refers to the proportion of micro-operations hitting the micro-operation cache among the plurality of threads as a whole. For example, if a total of P micro-operations from the plurality of threads are acquired within the sampling window, and m micro-operations in the P micro-operations hit the micro-operation cache, then the total micro-operation cache hit rate is Y=m/P.

For example, if a total of 1000 micro-operations of the thread 0 and 2000 micro-operations of the thread 1 are acquired within the sampling window, the total number of micro-operations is 3000. Among these 3000 micro-operations, 650 micro-operations (200 micro-operations from the thread 0 and 450 micro-operations from the thread 1) hit the micro-operation cache, then the total micro-operation cache hit rate is 650/3000 ≈ 21.67%.

For Step S232, based on the micro-operation cache hit rate and the total micro-operation cache hit rate, the control strategy is generated.

For example, according to the micro-operation cache hit rate Y1 for each of the plurality of threads and the total micro-operation cache hit rate Y, the control strategy is generated.

For example, the control strategy is used to indicate which threads' micro-operations are written (also known as "filling") into the micro-operation cache, and which threads' micro-operations are not written into the micro-operation cache.

For example, according to the micro-operation cache hit rate Y1 for each of a plurality of threads and the total micro-operation cache hit rate Y, the threads with the lower micro-operation cache hit rates are selected, and these threads are excluded to obtain the target thread. Under this circumstance, for example, the control strategy is to write the micro-operation of the target thread specified into the micro-operation cache.

In some embodiments of the present disclosure, step S232 includes: in response to the total micro-operation cache hit rate being higher than or equal to a hit rate threshold, determining that the control strategy includes storing a target micro-operation in the micro-operations of each of the plurality of threads into the micro-operation cache; and in response to the total micro-operation cache hit rate being lower than the hit rate threshold, determining the control strategy according to the micro-operation cache hit rate for each of the plurality of threads and the hit rate threshold.

For example, if the total micro-operation cache hit rate Y is greater than or equal to the hit rate threshold Y0, the control strategy includes storing the target micro-operation in the micro-operations of each of the plurality of threads into the micro-operation cache, namely each of the plurality of threads serves as the target thread, and the target micro-operation of the target thread is stored into the micro-operation cache.

In some embodiments of the present disclosure, the target micro-operation is obtained by decoding the core instruction of each thread, each thread includes a core instruction and a non-core instruction, and the importance degree of the core instruction is greater than the importance degree of the non-core instruction. Only storing the micro-operation obtained by decoding the core instruction of the target thread in the micro-operation cache, instead of storing all micro-operations of the target thread in the micro-operation cache, may save the storage space of the micro-operation cache for other threads to use. The importance degree of the instruction is represented, for example, by the number of times the instruction is executed during the complete execution of the program. The instruction is executed for more times, and the importance degree of the instruction is higher. For example, the program often includes a cycle body, and the instruction in the cycle body is often executed for a plurality of times. Therefore, the importance degree of the instruction in the cycle body is higher than the importance degree of the instruction outside the cycle body. In some embodiments of the present disclosure, the core instruction refers to the instruction within the cycle body (namely a cycle instruction), while the non-core instruction refers to the instruction outside the cycle body. Alternatively, the core instruction refers to the instruction that is executed more than once during the complete execution of the program, while the non-core instruction refers to the instruction that is executed only once during the complete execution of the program.

For example, if the total micro-operation cache hit rate Y is less than Y0, the control strategy is determined according to the micro-operation cache hit rate of each of the plurality of threads and the hit rate threshold.

For example, each micro-operation cache hit rate Y1 is compared with the hit rate threshold Y0, the micro-operation cache hit rate Y1 that is greater than the hit rate threshold Y0 is determined, the threads with Y1>Y0 serve as the target threads, and the control strategy includes storing the target micro-operations of these target threads in the micro-operation cache.

In some embodiments of the present disclosure, in response to the total micro-operation cache hit rate Y being lower than the hit rate threshold Y0, the target thread with the micro-operation cache hit rate Y1 that conforms to the condition is selected according to the micro-operation cache hit rate Y1 for each of the plurality of threads; and it is determined that the control strategy includes writing the micro-operation of the target thread into the micro-operation cache, and not writing the micro-operations of the remaining threads in the plurality of threads except for the target thread into the micro-operation cache.

The target thread with the micro-operation cache hit rate Y1 that conforms to the condition is, for example, the target thread of which the micro-operation cache hit rate Y1 is lower than a preset hit rate. The preset hit rate may be set by those skilled in the art. Alternatively, a plurality of micro-operation cache hit rates Y1 may be sorted in an ascending order, and the thread sorted and located after a preset position is the target thread that conforms to the condition.

In some embodiments of the present disclosure, for example, in response to the total micro-operation cache hit rate Y being lower than the hit rate threshold Y0, the object thread with the lowest micro-operation cache hit rate Y1 among the plurality of threads is excluded to obtain the target thread.

In other embodiments of the present disclosure, for example, the plurality of threads are sorted according to the micro-operation cache hit rate of each of the plurality of threads, the object thread with the lowest micro-operation cache hit rate among the plurality of threads is preferably excluded sequentially, and the total micro-operation cache hit rate of the remaining threads after excluding the object thread is calculated, until the total micro-operation cache hit rate of the remaining threads is higher than or equal to the hit rate threshold; and the remaining threads of which the total micro-operation cache hit rate is higher than or equal to the hit rate threshold are used as the target threads.

For example, the processor simultaneously executes 4 threads, namely thread 1, thread 2, thread 3, and thread 0; the micro-operation cache hit rates of these 4 threads are Y11, Y12, Y13, and Y10 respectively, and the total micro-operation cache hit rate of these 4 threads is Y. If Y<Y0, the thread 1, thread 2, thread 3, and thread 0 are sorted according to the size of Y11, Y12, Y13, and Y10. For example, the results of sorting in the ascending order are thread 1, thread 2, thread 0, and thread 3, after the thread 1 is excluded from the top, and the total micro-operation cache hit rate Y' for the remaining threads (thread 2, thread 0, and thread 3) is calculated. If Y'<Y0, it continues to exclude the thread 2, and the total micro-operation cache hit rate Y" for the remaining threads (thread 0 and thread 3) is calculated. If Y" ≥ Y0, the thread 0 and the thread 3 serve as the target threads. If Y"<Y0, it continues to exclude the thread 0, until the total micro-operation cache hit rate of the remaining threads is greater than or equal to the hit rate threshold.

In the embodiments of the present disclosure, those skilled in the art may set the hit rate threshold according to actual needs, and the present disclosure does not specifically limit the hit rate threshold. For example, the hit rate threshold may be 50%.

In some embodiments of the present disclosure, Step S203 in Fig. 2 includes: within a control window after the sampling window ends, controlling allocation of resources of the micro-operation cache according to the control strategy. In some embodiments of the present disclosure, the size of the control window may be the same as the size of the sampling window. For example, if the cycle number of clock cycles in the sampling window is within a preset range, then the time length of the control window is the same as the time length of the sampling window.

In other embodiments of the present disclosure, the size of the control window may be different from the size of the sampling window.

In some embodiments of the present disclosure, within the sampling window, the target micro-operation in the micro-operations of each of the plurality of threads is stored in the micro-operation cache.

In some embodiments of the present disclosure, the sampling window and the control window are used as one control cycle, and the method further includes: at the end of one control cycle, recounting the cycle number of clock cycles.

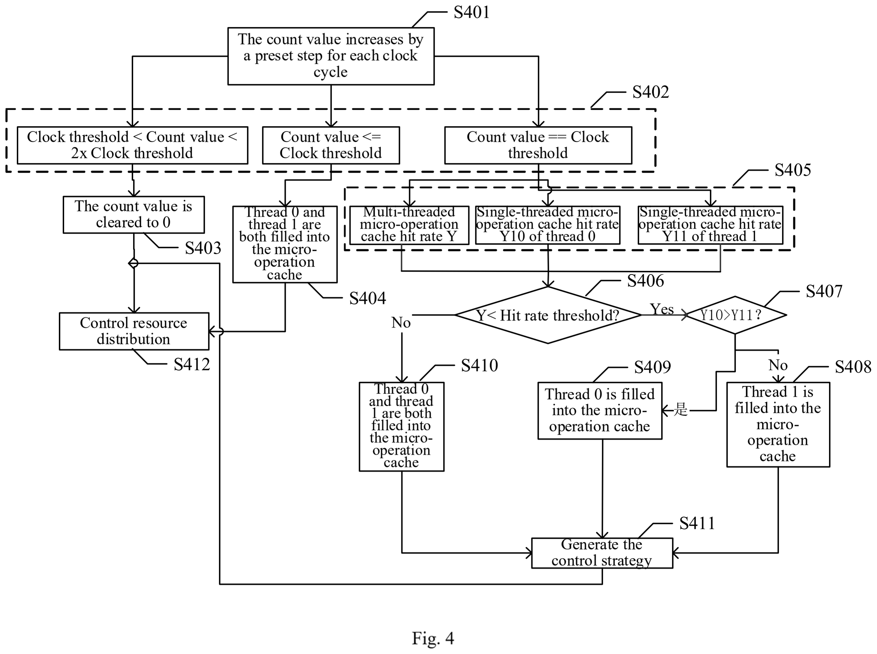

The embodiments of resource allocation in the present disclosure are described below in combination with Fig. 4.

Fig. 4 shows a flow diagram of another resource allocation method provided in at least one embodiment of the present disclosure.

As shown in Fig. 4, the resource allocation method includes steps S401~S412.

Step S401: counting clock cycles, and increasing the count value by a preset step for each clock cycle. The preset step is, for example, 1. Certainly, the preset step may also be other positive integers such as 2 and 3.

Step S402: comparing the current count value with a clock threshold. The clock threshold determines the sampling window. For example, if the clock threshold is 500, the sampling window is the clock cycle with a count value of [0, 500]. For example, the current count value is compared with 500. For example, if the count value is less than or equal to the clock threshold, Step S404 is executed; if the count value is greater than the clock threshold and less than 2× the clock threshold, Step S403 is executed; and if the count value is equal to the clock threshold, Step S405 is executed.

Step S403: clearing the count value to 0, and restarting the next sampling window. If the count value is greater than the clock threshold and less than 2× the clock threshold, the count value is cleared to 0, namely the time length of the control window is the same as the time length of the sampling window, both are 500 clock cycles. At the end of one control cycle, the cycle number of clock cycles is recounted.

Step S404: filling both thread 0 and thread 1 into the micro-operation cache. Namely, when the count value does not reach the clock threshold, the micro-operation of each thread is filled into the micro-operation cache. Namely, within the sampling window, the target micro-operation in the micro-operations of each of a plurality of threads is stored in the micro-operation cache, and the plurality of threads compete with each other for resources. After Step S404 is executed, Step S412 is directly executed.

Step S405: when the count value is equal to the clock threshold, acquiring the micro-operation cache hit rate Y10 of the thread 0, the micro-operation cache hit rate Y11 of the thread 1, and the total micro-operation cache hit rate Y, and generating the control strategy according to the above hit rates.

It should be noted that in this embodiment, the simultaneous execution of two threads (thread 0 and thread 1) is taken as an example to describe the implementation mode, but this has no limiting effect on the present disclosure.

In the above embodiment, according to the algorithm, each clock cycle is added by 1. When the count value is less than the clock threshold, all threads are normally filled into the micro-operation cache, competing for resources with each other; and the hit information of the micro-operation cache of each entirety within the sampling window of the clock threshold is simultaneously monitored. When the count value is equal to the clock threshold, a decision is made according to the hit information. Namely, within the control window after the sampling window ends, the allocation of resources of the micro-operation cache is controlled according to the control strategy, and within the sampling window, the target micro-operation in the micro-operations of each of a plurality of threads is stored in the micro-operation cache. In the above example,
Step S406: judging whether the total micro-operation cache hit rate Y is less than the hit rate threshold. If the total micro-operation cache hit rate Y is less than the hit rate threshold, Step S407 is executed; and if the total micro-operation cache hit rate Y is not less than the hit rate threshold, Step S410 is executed.
Step S407: comparing the micro-operation cache hit rate Y10 of the thread 0 with the micro-operation cache hit rate Y11 of the thread 1. If Y10>Y11, Step S409 is executed; and if Y10 ≤Y11, Step S408 is executed.
Step S408: filling the micro-operation of the thread 1 into the micro-operation cache.
Step S409: filling the micro-operation of the thread 0 into the micro-operation cache.
Step S410: filling the micro-operations of the thread 0 and the thread 1 into the micro-operation cache.
Step S411: generating a control strategy. The control strategy includes, for example, the results obtained in Steps S408~S410.
Step S412: controlling the resource allocation of the micro-operation cache according to the control strategy.

In the example of Fig. 4, if the overall micro-operation cache hit rate (namely, the total inmicro-operation cache hit rate Y) is higher than the hit rate threshold, the control strategy is to continue to simultaneously fill the micro-operations of all threads into the micro-operation cache; and if the overall micro-operation cache hit rate is lower than the hit rate threshold, a control strategy decision is generated according to the micro-operation cache hit rate of each thread, and the control strategy is, for example, stopping filling the thread with the lowest micro-operation cache hit rate into the micro-operation cache.

An embodiment of the present disclosure proposes a method for distributing resources of a micro-operation cache in a simultaneous multi-threading mode, which solves the problem of low overall micro-operation cache hit rate caused by a plurality of threads competing for the resources of the micro-operation cache. Furthermore, it not only accelerates the running speed of the entire CPU, but also saves the power consumption.

Another aspect of the present disclosure provides a processor, and the processor is configured to simultaneously execute a plurality of threads. The processor includes: a micro-operation cache, a monitor, and a controller. The monitor is coupled with the micro-operation cache and configured to acquire hit information of micro-operations hitting the micro-operation cache for the plurality of threads within a sampling window, and determine a control strategy according to the hit information; and the controller is coupled with the micro-operation cache and the monitor, and configured to acquire the control strategy provided by the monitor, and control allocation of resources of the micro-operation cache according to the control strategy. This processor may at least partially solve the problem of low overall micro-operation cache hit rate caused by a plurality of threads competing for the resources of the micro-operation cache. It not only accelerates the running speed of the entire CPU, but also saves the power consumption.

An embodiment of the present disclosure proposes a processor for distributing micro-operation cache resources in a simultaneous multi-threading mode. For example, the processor may add a monitor before a micro-operation queue and add a controller before the micro-operation cache. The monitor is used to generate a control strategy according to the hit information, and the controller is used to control the resource allocation of the micro-operation cache according to the control strategy.

It should be noted that although the embodiment of the present disclosure uses simultaneous execution of two threads (thread 0 and thread 1) to describe the implementation mode of the present disclosure, this has no limiting effect on the present disclosure, and the resource allocation method provided in the present disclosure may be applied to any numbers of threads executing simultaneously.

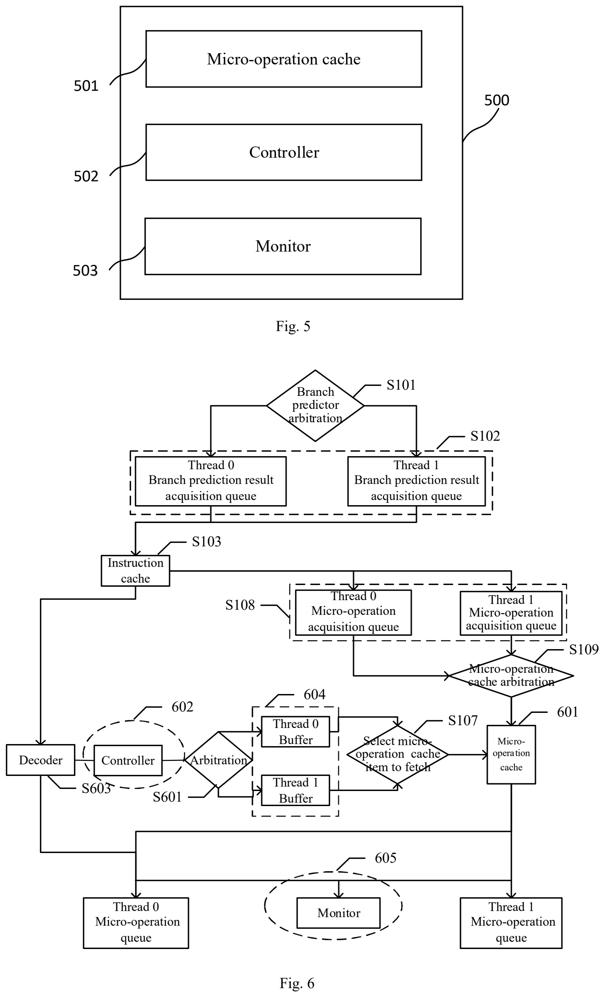

Fig. 5 shows a schematic diagram of a processor 500 provided in at least one embodiment of the present disclosure.

As shown in Fig. 5, the processor 500 includes a micro-operation cache 501, a controller 502, and a monitor 503.

The monitor 503 is coupled with the micro-operation cache 501, and configured to acquire hit information of micro-operations hitting the micro-operation cache for a plurality of threads within a sampling window, and determine a control strategy according to the hit information. The monitor 503 is used, for example, to perform Steps S201 and S202 in Fig. 2.

The controller 502 is coupled with the micro-operation cache 501 and the monitor 503, and configured to acquire the control strategy provided by the monitor 503, and control allocation of resources of the micro-operation cache according to the control strategy. The controller 502 is used, for example, to execute Step S203 in Fig. 2.

Please refer to the description above for the micro-operation cache 501. The controller 502 and the monitor 503 may be hardware, software, firmware, or any feasible combinations thereof. For example, the controller 502 and the monitor 503 may be a dedicated or general-purpose circuit, a chip, or an apparatus or the like. The specific implementation forms of the above units are not limited in the embodiments of the present disclosure. The controller 502 and the monitor 503 correspond to the various steps of the aforementioned resource allocation method. For specific functions of the controller 502 and the monitor 503, please refer to the relevant descriptions of the resource allocation method, and it is not repeatedly described here.

Fig. 6 shows a schematic diagram of a microstructure of a processor provided in at least one embodiment of the present disclosure.

As shown in Fig. 6, the processor includes not only a micro-operation cache 601, a controller 602, and a monitor 605, but also a decoder 603.

The micro-operation cache 601, the controller 602, and the monitor 605 are similar to the micro-operation cache 501, the controller 502, and the monitor 503 in Fig. 5 above. The micro-operation cache 601 is also similar to the micro-operation cache 110 in Fig. 1.

The decoder 603 is coupled with the monitor 605 and configured to decode an instruction of each thread to obtain a micro-operation of the each thread; and the monitor 605 is configured to acquire a first number of micro-operations from the decoder 603 and a second number of micro-operations from the micro-operation cache 601 for each of the plurality of threads, and the first number and the second number are used as the hit information.

As shown in Fig. 6, the processor may further include a buffer 604.

An input end of the buffer 604 is coupled with an output end of the controller 602, and an output end of the buffer 604 is coupled with the micro-operation cache 601. The buffer includes a plurality of buffer regions, and the plurality of buffer regions are in one-to-one correspondence with the micro-operations of the plurality of threads and are configured to store the micro-operations of the plurality of threads. The buffer is configured to write the micro-operations in the buffer regions into the micro-operation cache.

The decoder 603 is also coupled with an input end of the controller 602, and the controller is configured to control whether the micro-operation of the current thread in the plurality of threads provided by the decoder 603 is written into the buffer region corresponding to the current thread according to the control strategy.

In this embodiment, the controller 602 firstly writes the target micro-operation of the target thread into the buffer region corresponding to the target thread in the buffer 604 according to the control strategy, and when a certain number of micro-operations are accumulated in the buffer region to form a micro-operation cache item, the micro-operation cache item is fetched from the buffer and stored in the micro-operation cache 601 according to the arbitration of the micro-operation cache 601.

For example, the controller 602 acquires the micro-operation of the thread 0 from the decoder 603 and determines whether the micro-operation of the thread 0 should be stored in the buffer region corresponding to the thread 0 according to the control strategy. If the micro-operation of the thread 0 need to be stored in the buffer region corresponding to the thread 0, then Step S601 is executed, namely the controller 602 arbitrates to store the micro-operation of the thread 0 in the buffer region corresponding to the thread 0.

As shown in Fig. 6, other structures and flows of the microstructure of the processor are similar to that of Fig. 1, except for the controller 602, the monitor 605, and the arbitration in Step S601 performed by the controller, which are enclosed in an elliptical dashed box.

The components and structures of the processor shown in Figs. 5 and 6 are exemplary only and not limiting. The processor may also include other components and structures as needed.

The specific implementation forms of the above units may be hardware, software, firmware, and any feasible combinations thereof, and the embodiments of the present disclosure do not limit this.

It should be noted that the embodiments of the present disclosure are not only applicable to the SMT mode, but also to other modes of simultaneous execution of a plurality of threads, as long as the processor executes a plurality of threads simultaneously, the resource allocation method provided in the embodiments of the present disclosure may be used.

Another aspect of the present disclosure provides an electronic device, and the electronic device includes the processor provided in any one embodiment of the present disclosure.

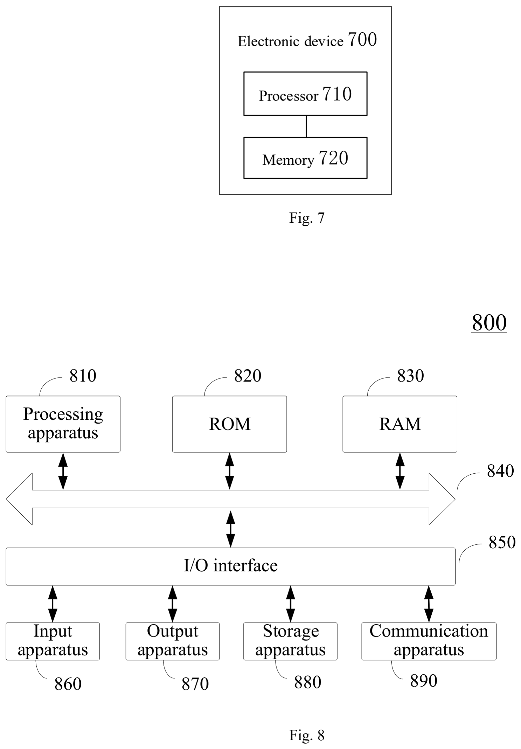

Fig. 7 illustrates a schematic block diagram of an electronic device provided by some embodiments of the present disclosure. As illustrated in Fig. 7, the electronic device 700 includes a processor 710 and a memory 720. The memory 720 is configured to store non-transitory computer-readable instructions (e.g., one or more computer program modules). The processor 710 is configured to execute the non-transitory computer-readable instructions, and when the non-transitory computer-readable instructions are executed by the processor 710, one or more steps in the resource allocation method described above are performed. The memory 720 and the processor 710 may be interconnected by a bus system and/or other forms of connection mechanisms (not illustrated).

The processor 701 may be a processor provided in any embodiment of the present disclosure, for example, the microstructure of the processor 701 is similar to the microstructure of the processor in Fig. 6.

For example, the processor 710 is a central processing unit (CPU), a graphics processing unit (GPU), or other forms of processing units having data processing capabilities and/or program execution capabilities. For example, the central processing unit (CPU) may be an X86 or ARM architecture, and the like. The processor 710 may be a general-purpose processor or a special-purpose processor, and can control other components in the electronic device 400 to perform desired functions.

For example, the memory 720 includes any combination of one or more computer program products, which may include various forms of computer-readable storage media, such as volatile memory and/or non-volatile memory. The volatile memory may include, for example, random access memory (RAM) and/or cache memory, etc. The non-volatile memory may include, for example, read-only memory (ROM), hard disk, erasable programmable read-only memory (EPROM), compact disk read-only memory (CD-ROM), USB memory, flash memory, and the like. One or more computer program modules may be stored on the computer-readable storage medium, and the processor 710 can execute one or more computer program modules to achieve various functions of the electronic device 700. Various application programs, various data, and various data used and/or generated by the application programs may also be stored in the computer-readable storage medium.

It should be noted that, in the embodiments of the present disclosure, the specific functions and technical effects of the electronic device 700 may refer to the above description about the resource allocation method, which will not be repeated here.

Fig. 8 illustrates a schematic block diagram of another electronic device provided by some embodiments of the present disclosure. The electronic device 800 is, for example, suitable for implementing the resource allocation method provided by the embodiments of the present disclosure. The electronic device 800 may be a terminal device or the like. It should be noted that the electronic device 800 illustrated in Fig. 8 is only an example, which does not limit the functions and application scope of the embodiments of the present disclosure.

As illustrated in Fig. 8, the electronic device 800 includes a processing apparatus 810 (such as a central processing unit, a graphics processing unit, etc.) that can perform various appropriate actions and processes in accordance with a program stored in read-only memory (ROM) 820 or loaded from a storage apparatus 880 into random access memory (RAM) 830. The processing apparatus 810 may be a processor provided in any embodiment of the present disclosure, for example, the microstructure of the processing apparatus 810 is similar to the microstructure of the processor in Fig. 6.

In the RAM 830, various programs and data required for the operation of the electronic device 800 are also stored. The processing apparatus 810, the ROM 820 and the RAM 830 are connected to each other through a bus 840. An input/output (I/O) interface 850 is also connected to the bus 840.

Usually, the following apparatus may be connected to the I/O interface 850: an input apparatus 860 including, for example, a touch screen, a touch pad, a keyboard, a mouse, a camera, a microphone, an accelerometer, a gyroscope, or the like; an output apparatus 870 including, for example, a liquid crystal display (LCD), a loudspeaker, a vibrator, or the like; the storage apparatus 880 including, for example, a magnetic tape, a hard disk, or the like; and a communication apparatus 890. The communication apparatus 890 may allow the electronic device 800 to be in wireless or wired communication with other devices to exchange data. While Fig. 8 illustrates the electronic device 800 having various apparatuses, it should be understood that not all of the illustrated apparatuses are necessarily implemented or included, and the electronic device 800 may alternatively implement or have more or fewer apparatuses.

For the present disclosure, the following statements should be noted:
(1) The drawings involve only the structure(s) in connection with the embodiment(s) of the present disclosure, and other structure(s) can be referred to common design(s).
(2) In case of no conflict, features in one embodiment or in different embodiments can be combined to obtain new embodiments.

What have been described above are only specific implementations of the present disclosure, the protection scope of the present disclosure is not limited thereto, and the protection scope of the present disclosure should be based on the protection scope of the claims.

## Claims

1. A resource allocation method applied to a processor, wherein the processor is configured to simultaneously execute a plurality of threads, the processor comprises a micro-operation cache, and the method comprises:
acquiring hit information of micro-operations hitting the micro-operation cache for the plurality of threads within a sampling window;
determining a control strategy according to the hit information; and
controlling allocation of resources of the micro-operation cache according to the control strategy.

2. The method according to claim 1, wherein the determining the control strategy according to the hit information comprises:
calculating a micro-operation cache hit rate for each of the plurality of threads according to the hit information, wherein the micro-operation cache hit rate indicates a proportion of micro-operations that hit the micro-operation cache in each thread among all micro-operations in each thread within the sampling window;
calculating a total micro-operation cache hit rate for the plurality of threads according to the hit information, wherein the total micro-operation cache hit rate indicates a proportion of micro-operations that hit the micro-operation cache in the plurality of threads among all micro-operations in the plurality of threads within the sampling window; and
generating the control strategy based on the micro-operation cache hit rate for each of the plurality of threads and the total micro-operation cache hit rate.

3. The method according to claim 2, wherein the generating the control strategy based on the micro-operation cache hit rate for each of the plurality of threads and the total micro-operation cache hit rate comprises:
in response to the total micro-operation cache hit rate being higher than or equal to a hit rate threshold, determining that the control strategy comprises storing a target micro-operation in micro-operations of each of the plurality of threads into the micro-operation cache; and
in response to the total micro-operation cache hit rate being lower than the hit rate threshold, determining the control strategy according to the micro-operation cache hit rate for each of the plurality of threads and the hit rate threshold.

4. The method according to claim 3, wherein the in response to the total micro-operation cache hit rate being lower than the hit rate threshold, determining the control strategy according to the micro-operation cache hit rate for each of the plurality of threads and the hit rate threshold comprises:
in response to the total micro-operation cache hit rate being lower than the hit rate threshold, selecting a target thread, of which the micro-operation cache hit rate conforms to a condition, according to the micro-operation cache hit rate for each of the plurality of threads; and
determining that the control strategy comprises writing a micro-operation of the target thread into the micro-operation cache, and not writing micro-operations of remaining threads in the plurality of threads except for the target thread into the micro-operation cache.

5. The method according to claim 4, wherein the in response to the total micro-operation cache hit rate being lower than the hit rate threshold, selecting the target thread, of which the micro-operation cache hit rate conforms to the condition, according to the micro-operation cache hit rate for each of the plurality of threads comprises:
in response to the total micro-operation cache hit rate being lower than the hit rate threshold, excluding an object thread with a lowest micro-operation cache hit rate among the plurality of threads to obtain the target thread.

6. The method according to claim 4 or 5, wherein the in response to the total micro-operation cache hit rate being lower than the hit rate threshold, selecting the target thread, of which the micro-operation cache hit rate conforms to a condition, according to the micro-operation cache hit rate for each of the plurality of threads comprises:
sorting the plurality of threads according to the micro-operation cache hit rate for each of the plurality of threads, preferentially excluding an object thread with a lowest micro-operation cache hit rate among the plurality of threads sequentially, and calculating a total micro-operation cache hit rate of remaining threads after excluding the object thread, until the total micro-operation cache hit rate of the remaining threads is higher than or equal to the hit rate threshold; and
using the remaining threads of which the total micro-operation cache hit rate higher than or equal to the hit rate threshold as target threads.

7. The method according to any one of claims 1-6, wherein the acquiring hit information of micro-operations hitting the micro-operation cache for the plurality of threads within a sampling window comprises:
monitoring a first number of micro-operations from a decoder and a second number of micro-operations from the micro-operation cache for each of the plurality of threads, wherein the first number and the second number are used as the hit information.

8. The method according to any one of claims 1-7, wherein the sampling window comprises a cycle number of clock cycles within a preset range.

9. The method according to claim 8, wherein the controlling allocation of resources of the micro-operation cache according to the control strategy comprises:
within a control window after the sampling window ends, controlling allocation of resources of the micro-operation cache according to the control strategy.

10. The method according to claim 9, wherein within the sampling window, a target micro-operation in micro-operations of each of the plurality of threads is stored in the micro-operation cache.

11. The method according to claim 9 or 10, wherein the sampling window and the control window serve as one control cycle, and the method further comprises:
at the end of one control cycle, the cycle number of the clock cycles is recounted.

12. The method according to claim 9 or 10, wherein a time length of the control window is same as a time length of the sampling window.

13. The method according to any one of claims 3-6, wherein the target micro-operation is obtained by decoding a core instruction of each thread, wherein each thread comprises the core instruction and a non-core instruction, and an importance degree of the core instruction is greater than an importance degree of the non-core instruction.

14. A processor, configured to simultaneously execute a plurality of threads, wherein the processor comprises:
a micro-operation cache;
a monitor, coupled with the micro-operation cache and configured to acquire hit information of micro-operations hitting the micro-operation cache for the plurality of threads within a sampling window, and determine a control strategy according to the hit information; and
a controller, coupled with the micro-operation cache and the monitor, and configured to acquire the control strategy provided by the monitor, and control allocation of resources of the micro-operation cache according to the control strategy.

15. The processor according to claim 14, further comprising:
a decoder, coupled with the monitor and configured to decode an instruction of each thread to obtain a micro-operation of each thread;
wherein the monitor is configured to acquire a first number of micro-operations from the decoder and a second number of micro-operations from the micro-operation cache for each of the plurality of threads, wherein the first number and the second number are used as the hit information.

16. The processor according to claim 15, further comprising:
a buffer, wherein an input end of the buffer is coupled with an output end of the controller, an output end of the buffer is coupled with the micro-operation cache, the buffer comprises a plurality of buffer regions, the plurality of buffer regions are in one-to-one correspondence with micro-operations of the plurality of threads and are configured to store the micro-operations of the plurality of threads, the buffer is configured to write micro-operations in the buffer regions into the micro-operation cache,
the decoder is also coupled with an input end of the controller,
wherein the controller is configured to: control whether a micro-operation of a current thread in the plurality of threads provided by the decoder is written into a buffer region corresponding to the current thread according to the control strategy.

17. An electronic device, comprising: the processor according to any one of claims 14-16.
